Europäisches Patentamt

European Patent Office

Office européen des brevets

(11) Numéro de publication: **0 021 978**
A1

## (12) DEMANDE DE BREVET EUROPEEN

(21) Numéro de dépôt: **80400879.5**

(22) Date de dépôt: **17.06.80**

(51) Int. Cl.³: **G 01 F 1/06**

(30) Priorité: **20.06.79 FR 7915805**

(43) Date de publication de la demande:
**07.01.81 Bulletin 81/1**

(84) Etats Contractants Désignés:
**AT BE CH DE GB IT LI NL SE**

(71) Demandeur: **"THOMSON-CSF"**
**173, Boulevard Haussmann**
**F-75360 Paris Cedex 08(FR)**

(72) Inventeur: **Coussot, Gérard**
**"THOMSON-CSF" SCPI 173, bld Haussmann**
**F-75360 Paris Cedex 08(FR)**

(72) Inventeur: **Texier, Pierre**
**"THOMSON-CSF" SCPI 173, bld Haussmann**
**F-75360 Paris Cedex 08(FR)**

(74) Mandataire: **Wang, Pierre et al,**
**"THOMSON-CSF" - SCPI 173, bld. Haussmann**
**F-75360 Paris Cedex 08(FR)**

(54) **Débitmètre à turbine.**

(57) Débitmètre utilisant une turbine (6) mise en rotation sous l'action du fluide dont on désire mesurer le débit.

La turbine (6) étant conductrice, au moins aux extrémités de ses pales, (1) lors de la rotation, chaque passage d'une pale (4) génère dans une bobine (2) placée à proximité des courants de Foucault qui provoquent le décodage d'un oscillateur incluant la bobine. Un circuit électronique fournit un signal périodique dont la fréquence est égale à la fréquence de passage des pales (1) devant la bobine (2). Cette fréquence est, dans une certaine gamme de valeurs, proportionnelle au débit du fluide entraînant la turbine.

L'invention s'applique notamment à la mesure du débit d'essence dans une automobile.

FIG. 1

## DEBITMETRE A TURBINE

La présente invention concerne un débitmètre utilisant une turbine mise en rotation sous l'action du fluide dont on désire mesurer le débit.

Parmi les nombreux types de débitmètres existants, certains, plus adaptés à la mesure de la vitesse des liquides, utilisent une hélice mise en rotation par le liquide en mouvement et dont les pales passent devant un dispositif capteur fournissant une impulsion à chaque passage d'une pale, et éventuellement associé à un compteur d'impulsions qui fournit directement un signal proportionnel à la vitesse de rotation de l'hélice, elle-même liée au débit volumique à mesurer.

Deux types de capteurs sont essentiellement utilisés :

- les capteurs photoélectriques dans lesquels le passage d'une pale provoque une interruption dans la propagation d'un faisceau lumineux, détectée par exemple par une cellule photoélectrique ;

- les capteurs magnétiques dans lesquels des ferrites sont inclus à l'extrémité des pales de la turbine, provoquant des variations d'inductance d'une bobine reliée à un circuit électrique. Ce dernier type de capteur est sensible aux champs magnétiques pouvant exister dans son voisinage.

On connait également des capteurs utilisant un principe de détection différent, mettant en oeuvre la création de courants de Foucault dans un conducteur se déplaçant à proximité par une bobine faisant partie d'un circuit oscillant. Les courants de Foucault créés par le passage des pales de la turbine, axiale, conductrice, provoquent une variation dans l'amortissement du circuit oscillant.

Cette variation peut être détectée par un circuit électronique, basé sur le respect et non respect des conditions d'oscillation d'un oscillateur, fournissant un signal de sortie dont la fréquence est égale à la fréquence de passage des pales de la turbine devant la bobine.

L'invention a pour objet un débitmètre du type comprenant une chambre dans laquelle circule le fluide dont on veut mesure le débit, une turbine à pales conductrices mise en rotation dans la chambre sous l'action du fluide qui y circule, un circuit oscillateur comportant une bobine située à proximité de la turbine de façon que les passages successifs des pales entrainent le décrochage des oscillations, et des moyens détecteurs délivrant un signal représentatif de la cadence des décrochages, cette cadence constituant une mesure de la vitesse de rotation de la turbine, caractérisé en ce que cette turbine comporte un alésage central enfilé sur un axe de rotation fixe solidaire des parois de la chambre, axe sur lequel cette turbine est montée folle, et que la chambre comporte sur une paroi disposée latéralement par rapport à l'axe de rotation un orifice d'adduction et un orifice d'extraction du fluide, l'axe de l'orifice d'adduction étant dirigé vers les pales.

L'invention peut s'appliquer dans l'industrie automobile, notamment pour la mesure de débits d'essence.

D'autres caractéristiques et avantages de l'invention apparaîtront dans la description ci-après, présentée à titre d'exemple non limitatifs, et des dessins qui l'accompagnent :

- La figure 1 représente un débitmètre selon l'invention.

- La figure 2 est une vue de la turbine.

- La figure 3 est un schéma électrique du capteur associé.

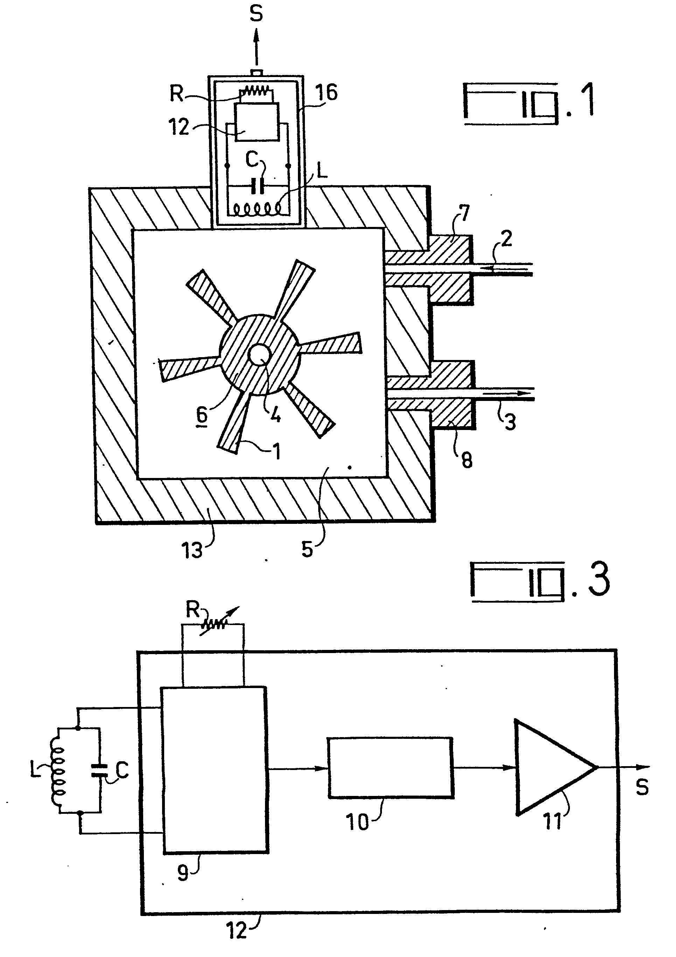

La figure 1 représente schématiquement un débitmètre selon l'invention. La mesure du débit d'un fluide est basée sur la mise en rotation d'une turbine 6 sous l'action dynamique du fluide. La turbine 6 pivote autour d'un axe 4 dans une chambre 5. Le fluide provenant d'une canalisation 2 est introduit dans la chambre 5 au moyen d'une buse d'entrée 7. La chambre 5 communique d'autre part avec une deuxième canalisation 3 au moyen d'une buse de sortie 8. L'étanchéité de la chambre 5 est assurée par une paroi 13. La turbine comporte des pales 1, au nombre de 6 sur la figure. Un capteur de proximité 16 est associé à la turbine. L'une des extrémités du capteur est fixée, par exemple par vissage, dans la paroi 13. Cette extrémité comporte une bobine L mise en parallèle avec un condensateur C de façon à former un circuit oscillant. Le reste du capteur sera détaillé par la suite. Les pales 1 de la turbine sont métalliques. Au cours de la rotation, chaque fois qu'une pale passe à proximité de la bobine L, des courants de Foucault sont induits, produisant une forte augmentation de l'amortissement du circuit oscillant LC. La variation d'amortissement est détectée par le capteur 16 qui est conçu, par exemple, pour fournir un signal alternatif S dont la fréquence est égale à la fréquence de passage des pales devant la bobine, donc proportionnelle à la vitesse de rotation de la turbine.

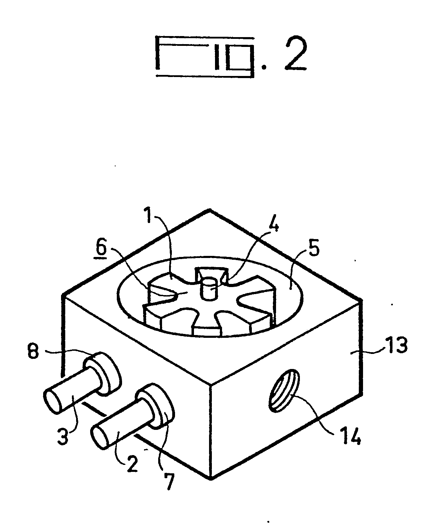

La figure 2 est une vue partielle de la chambre 5 dans laquelle est placée la turbine 6. Sur cette vue, la chambre 5 a une forme cylindrique, ce qui facilite sa réalisation, mais cette forme n'est pas limitative. L'axe 4 de la turbine, fixé rigidement à la paroi 13 est de préférence vertical, de façon à obtenir une meilleure précision, surtout lors de la mesure de faible débits. Un orifice fileté 14 est ménagé dans la paroi 13 permettant l'introduction du capteur 16. Le choix de matériaux constituant la paroi 13, la turbine 6 et son axe 4 est très vaste. Il s'agit avant tout que ces matériaux conviennent au liquide dont on mesure le débit. Le choix sera également guidé par le souci d'économie. La paroi 13 et l'axe 4 sont non conducteurs. On peut utiliser notamment : du carbure de tungstène, du nylon, du polychlorure de vinyle. La turbine, elle, est conductrice, par exemple en acier doux. Il a été vérifié expérimentalement, avec une turbine en acier doux comportant 6 pales, de diamètre 20 mm et de hauteur de pales 8 mm que la vitesse de rotation de la turbine était proportionnelle au débit, dans une plage s'étendant d'environ 10 l/h à environ 30 l/h. On a mesuré alors une fréquence de passage de pales entre 50 Hz et de 250 Hz environ. On a constaté par ailleurs qu'un jeu suffisant devait être ménagé entre la turbine et la paroi pour obtenir une rotation de la turbine avec un faible débit. Par contre, un jeu trop important est néfaste avec un fort débit car alors, une partie du fluide circule autour de la turbine, sans l'entraîner, si bien que le débit mesuré devient inférieur au débit réel. En pratique, il convient d'adapter la valeur du jeu à la plage de valeurs de débits que l'on désire mesurer. Par ailleurs, pour améliorer la sensibilité donc permettre la mesure de débits plus faibles, il convient de diminuer la masse de la turbine. A cet effet, il est préférable que celle-ci ne soit pas constituée exclusivement de métal, trop lourd. On peut, par exemple, la réaliser dans un matériau plastique et métalliser l'extrémité des pales. Cette métallisation doit toutefois être assez importante pour que la variation d'amortissement, qui est liée à l'intensité des courants de Foucault induits par cette métallisation, soit détectable par le capteur 16.

La figure 3 est le schéma électrique d'un capteur de position 16, particulièrement adapté au débitmètre selon l'invention. Ce capteur, connu en soi, existe sur le marché en version intégrée pour des applications à l'automobile. Le circuit oscillant LC est bouclé sur un oscillateur 9 auquel est branché une résistance ajustable R, permettant de régler le seuil d'oscillation. Lorsque les conditions d'oscillation sont respectées, la boucle oscille à une fréquence déterminée par les valeurs de L et de C, qui est de l'ordre de 2 MHz. Lorsque l'amortissement du circuit oscillant augmente, à cause de la création des courants de Foucault, on peut faire en sorte, en réglant convenablement la valeur de R, et à condition que cette variation d'amortissement soit suffisante, que les conditions d'oscillation ne soient plus respectées si bien que le signal d'oscillation est alors nul. La boucle est reliée à un dispositif de détection et de filtrage 10 qui délivre un signal quasi rectangulaire dont la fréquence est égale à la fréquence de décrochage de l'oscillateur, c'est à dire à la fréquence de passage des pales, qui se situe dans le domaine des basses fréquences. Ce signal, amplifié par un amplificateur 11, fournit le signal de sortie S. Les différents éléments 9, 10 et 11 sont réalisés de façon à être intégrables, selon des techniques connues. Ils forment un circuit intégré contenu dans un boitier 12. Le circuit oscillant LC, la résistance ajustable R et les alimentations nécessaires, non représentées, étant connectés aux bornes du circuit intégré prévues à cet effet, sur une plaquette de circuit imprimé, on obtient un ensemble compact et économique. Le fait de disposer d'une sortie fréquentielle permet de numériser facilement le résultat de la mesure du débit, ce qui assure une lecture aisée.

5

## REVENDICATIONS

1. Débitmètre du type comprenant une chambre dans laquelle circule le fluide dont on veut mesurer le débit, une turbine à pales conductrices mise en rotation dans la chambre sous l'action du fluide qui y circule, un circuit oscillateur comportant une bobine située à proximité de la turbine de façon que les passages successifs des pales entraînent le décrochage des oscillations et des moyens détecteurs délivrant un signal représentatif de la cadence des décrochages, cette cadence constituant une mesure de la vitesse de rotation de la turbine, caractérisé en ce que cette turbine comporte un alésage central enfilé sur un axe de rotation fixe solidaire des parois de la chambre, axe sur lequel cette turbine est montée folle, et que la chambre comporte sur une paroi disposée latéralement par rapport à l'axe de rotation un orifice d'adduction et un orifice d'extraction du fluide, l'axe de l'orifice d'adduction étant dirigée vers les pales.

2. Débitmètre selon la revendication 1, caractérisé en ce que la turbine est réalisée dans une matière plastique, les pales étant munies de métallisations qui produisent le décrochage des oscillations.

3. Débitmètre selon l'une des revendications 1 ou 2, caractérisé en ce que le circuit oscillateur comporte des moyens de réglage du seuil de décrochage.

Fig.1

Fig.3

FIG. 2

# RAPPORT DE RECHERCHE EUROPEENNE

**Office européen des brevets**

Numéro de la demande

EP 80 40 0879

## DOCUMENTS CONSIDERES COMME PERTINENTS

| Catégorie | Citation du document avec indication, en cas de besoin, des parties pertinentes | Revendication concernée |
|---|---|---|
| X | <u>US - A - 3 981 194</u> (B.G. BLISE et al.)<br><br>* Figures 1,2; colonne 2, lignes 61-64; colonne 3, lignes 9-11 *<br><br>-- | 1,2 |
| | <u>US - A - 3 792 610</u> (B. KOUNTANIS et al.)<br><br>* Figure 2; colonne 2, lignes 1-10 *<br><br>-- | 1 |
| | <u>DE - A - 2 528 357</u> (LANGE NEGGER & LIECHTI)<br><br>* Figure 3; page 3, dernier paragraphe *<br><br>-- | 1 |
| | <u>DE - A - 2 362 054</u> (W.A. WEMYSS)<br>* Figures 2,4,5 *<br><br>-- | 1 |
| | <u>DE - A - 2 502 599</u> (W. KURLEMANN)<br>* Figures 1,3 *<br><br>-- | 1 |
| A | <u>US - A - 3 101 615</u> (C. RAVONE)<br>* Figure 5; colonne 4, ligne 66 - colonne 5, ligne 29 *<br><br>-- | 1 |
| A | <u>US - A - 3 455 162</u> (R. MICHENER et al.)<br><br>* Figures 1-3; colonne 3, lignes 9-52 *<br><br>-- ./. | 1 |

**CLASSEMENT DE LA DEMANDE (Int. Cl. 3)**

G 01 F 1/06

**DOMAINES TECHNIQUES RECHERCHES (Int. Cl. 3)**

G 01 F 1/06
1/075

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-09-1980 | THIBO |

OEB Form 1503.1 06.78

Office européen
des brevets

**RAPPORT DE RECHERCHE EUROPEENNE**

| **DOCUMENTS CONSIDERES COMME PERTINENTS** | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>DE - A - 2 616 323</u> (K. KUPPERS)  * Figures 1,2; page 7, alinéa's 3 et 4 *  ---- | 1 | |
| | | | DOMAINES TECHNIQUES RECHERCHES (Int. Cl. ³) |